# EUROPEAN PATENT SPECIFICATION

(11) **EP 4 072 191 B1**
(45) Date of publication and mention of the grant of the patent: **09.04.2025**
(21) Application number: 20896326.4
(22) Date of filing: 29.09.2020
(51) Int. Cl.: H04W 28/082, H04W 28/08

(54) **BEARER MIGRATION METHOD AND APPARATUS, AND STORAGE MEDIUM**
TRÄGERMIGRATIONSVERFAHREN UND -GERÄT, UND SPEICHERMEDIUM
PROCÉDÉ ET APPAREIL DE MIGRATION DE SUPPORT, ET SUPPORT DE STOCKAGE

(30) Priority: 05.12.2019 CN 201911237229
(43) Date of publication of application: 12.10.2022
(73) Proprietor: ZTE Corporation, Shenzhen, Guangdong 518057 (CN)
(72) Inventor: CAO, Yijin, Shenzhen, Guangdong 518057 (CN)
(74) Representative: Savi, Massimiliano
(86) International application number: PCT/CN2020/118838
(87) International publication number: WO 2021/109701

(56) References cited:
- CN-A- 103 987 087
- CN-A- 106 454 946
- US-A1- 2014 162 631
- US-A1- 2019 053 319
- ZTE: "Further Discussion on Load Information Reporting for MLB", vol. RAN WG3, no. Chongqing, China; 20191014 - 20191018, 4 October 2019 (2019-10-04), XP051792674, Retrieved from the Internet <URL:http://www.3gpp.org/ftp/tsg_ran/WG3_Iu/TSGR3_105bis/Docs/R3-195644.zip> [retrieved on 20191004]
- NTT DOCOMO ET AL: "Solution on Load management for NSA", vol. RAN WG3, no. Montreal, Canada; 20180702 - 20180706, 1 July 2018 (2018-07-01), XP051468187, Retrieved from the Internet <URL:http://www.3gpp.org/ftp/Meetings%5F3GPP%5FSYNC/RAN3/Docs> [retrieved on 20180701]
- ERICSSON: "SA and NSA indication in CGI reporting", vol. RAN WG2, no. Vancouver, Canada; 20180122 - 20180126, 12 January 2018 (2018-01-12), XP051386729, Retrieved from the Internet <URL:http://www.3gpp.org/ftp/tsg%5Fran/WG2%5FRL2/TSGR2%5FAHs/2018%5F01%5FNR/Docs/> [retrieved on 20180112]
- ZTE: "Further Discussion on Load Information Reporting for MLB", 3GPP DRAFT; R3-195644 FURTHER DISCUSSION ON LOAD INFORMATION REPORTING FOR MLB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Chongqing, China; 20191014 - 20191018, 4 October 2019 (2019-10-04), Mobile Competence Centre ; 650, route des Lucioles ; F-06921 Sophia-Antipolis Cedex ; France, XP051792674
- ERICSSON: "Load sharing and load balancing optimization", 3GPP DRAFT; R3-190824 - LOAD SHARING AND LOAD BALANCING OPTIMIZATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Athens, Greece; 20190225 - 20190301, 16 February 2019 (2019-02-16), Mobile Competence Centre ; 650, route des Lucioles ; F-06921 Sophia-Antipolis Cedex ; France, XP051604758

## Description

### TECHNICAL FIELD

The present disclosure relates to the field of mobile communication, and in particular to a bearer migration method and apparatus, and a computer-readable storage medium.

### BACKGROUND

Since 5G new radio (NR) has huge social benefits and a promising commercial prospect, various countries and regions have developed 5G NR and continuously increase technical investment, resulting in the rapid development of the 5G NR technology. At present, NR base stations have been deployed for testing in some regions, and the pre-commercial use of 5G NR has also been put forward.

In the evolution from the long-term evolution (LTE) to the NR network architecture, Non-Standalone (NSA) mode is an intermediate evolution form. NSA nodes play a very important strategic role in the evolution from 4G to 5G, and the load balancing of NSA nodes is a very important goal in the radio access network technology and also a technology focused by operators.

After accessing an LTE cell, an NSA terminal will select an NSA node according to the NSA selection strategy on the LTE side, then migrate bearers of a user equipment (UE) to the NSA node, and complete data transmission by utilizing the NSA node.

In the NSA networking, the UE is accessed on the LTE side, and the data is mainly transmitted on the NSA node. In this processing mode, after lots of UEs are accessed to a same NSA node, the load of the NSA node will be increased, so that the load of the NSA node is out of balance, resulting in low operation efficiency of the NSA node.

ZTE: "Further Discussion on Load Information Reporting for MLB", 3GPP DRAFT; R3-195644 FURTHER DISCUSSION ON LOAD INFORMATION REPORTING FOR MLB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS, vol. RAN WG3, no. Chongqing, China; 20191014 - 20191018 4 October 2019 (2019-10-04), XP051792674, relates to the load information reporting mechanism for EN-DC X2 interface and the load information selection for reporting in Release 16.

NTT DOCOMO ET AL: "Solution on Load management for NSA", 3GPP DRAFT; R3-183903 SOLUTION ON LOAD MANAGEMENT FOR NSAR3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Montreal, Canada; 20180702 - 20180706 1 July 2018 (2018-07-01), XP051468187, relates to the solution based on the way forward on the load management for NSA (i.e. FI and X2).

US2014162631A1 relates to a load sharing method in radio communication, including: determining, by a base station, whether load migration needs to be performed; and in the case of determining that the load migration needs to be performed, performing, by the base station, the load migration between a load sharing node and the base station.

ERICSSON: "SA and NSA indication in CGI reporting", 3GPP DRAFT; R2-1801309 - SA AND NSA INDICATION IN CGI REPORTING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Vancouver, Canada; 20180122 - 20180126 12 January 2018 (2018-01 -12), XP051386729, relates to further details of neighbour relation establishment in different deployment scenarios.

### SUMMARY

The invention is set out in the appended set of claims.

### BRIEF DESCRIPTION OF DRAWINGS

FIG. 1 is a flowchart of a load-based bearer migration method according to an embodiment of the present disclosure;
FIG. 2 is a flowchart of actively acquiring load information of an NSA node according to an embodiment of the present disclosure;
FIG. 3 is a flowchart of passively acquiring load information of an NSA node according to an embodiment of the present disclosure;
FIG. 4 is a schematic structural diagram of a load-based bearer migration apparatus according to an embodiment of the present disclosure;
FIG. 5 is a flowchart of load-based bearer migration from an LTE side to an NSA node according to an embodiment of the present disclosure;
FIG. 6 is a flowchart of load-based bearer migration from an NSA node to other NSA nodes according to an embodiment of the present disclosure; and
FIG. 7 is a schematic structural diagram of an electronic device.

The objective realization, functional characteristics and advantages of the present disclosure will be further described by embodiments with reference to the accompanying drawings.

### DETAILED DESCRIPTION

To make the technical problems to be solved, technical schemes and beneficial effects of the present disclosure clearer, the present disclosure will be further described below in detail by embodiments with reference to the accompanying drawings. It should be understood that the specific embodiments to be described herein are merely for illustrating the present disclosure, and are not intended to limit the present disclosure.

In the following description, the suffixes such as "module", "component" or "unit" for representing elements are merely used to facilitate the description of the present disclosure and have no any special meaning. Therefore, the "module", "component" or "unit" may be used interchangeably.

It is to be noted that the terms such as "first" and "second" in the description and claims of the present disclosure and the accompanying drawings are used for distinguishing similar objects, but not necessarily used for describing a specific sequence or a precedence order.

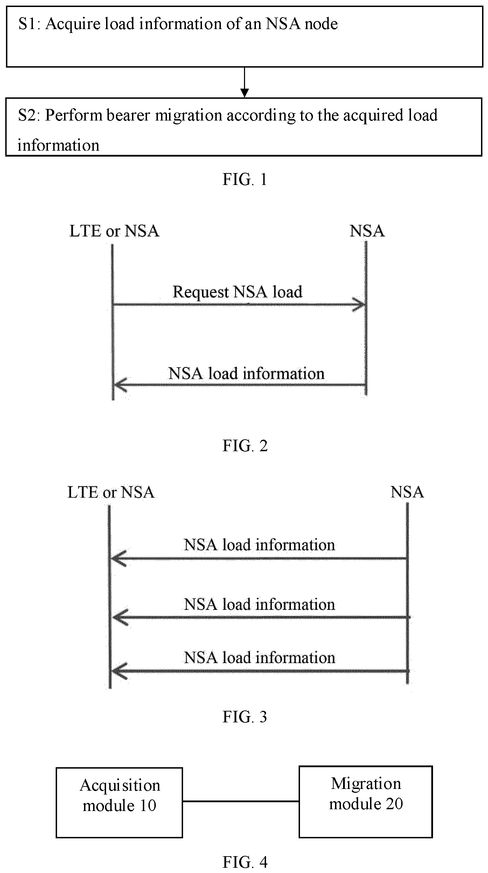

In an embodiment, as shown in FIG. 1, the present disclosure provides a load-based bearer migration method. The method includes the following steps S1 to S2.

At S1, load information of an NSA node is acquired.

The acquisition of the load information means that an LTE side or an NSA node acquires the load information of other NSA nodes when it is necessary to perform bearer migration. A load information acquisition message is transmitted through an X2 interface between the LTE side and an NSA node or through an X2 interface between NSA nodes.

The load information acquisition mode may be classified into two categories, i.e., active acquisition and passive acquisition.
1) The active acquisition means that when it is necessary to perform bearer migration, a current LTE side or a current NSA node actively transmits a load request message to candidate NSA nodes and acquires the load information of the candidate NSA nodes; and, upon receiving the load request message, the candidate NSA nodes reply load information of the candidate NSA nodes to the current LTE side or the current NSA node, as shown in FIG. 2.
2) The passive acquisition means that the current LTE side or the current NSA node passively receives the load information transmitted by the candidate NSA nodes and stores the latest received load information of the candidate NSA node, as shown in FIG. 3.

The candidate NSA nodes transmit the load information in two ways. One way is that the load information is transmitted to the current LTE side or the current NSA node when the load information is changed. The other way is that the load information is periodically transmitted to the current LTE side or the current NSA node.

In some implementations, the way to determine whether the load information is changed is setting stages. For example, N stages of load information are preset, and it is considered that the load information is changed when the actual load condition is in a different stage.

At S2, bearer migration is performed according to the acquired load information.

The performing bearer migration according to the acquired load information of the NSA node includes the following two scenarios.

In Scenario one, the bearers on the LTE side are migrated to an NSA node.

The performing bearer migration according to the acquired load information includes the following.
1) When an NSA terminal enters the current LTE side that needs to perform bearer migration, the current LTE side sorts acquired candidate NSA nodes in a preset load sorting mode according to the acquired load information of the candidate NSA nodes.
2) The current LTE side selects first N (N is an integer) candidate NSA nodes to form a target NSA node list.
3) The current LTE side selects, from the target NSA node list, a target NSA node for UE bearer migration attempts until the bearer migration is successful.

According to the claimed invention, a bearer migration metod is provided comprising: acquiring load information of a Non-Standalone, NSA, node; and performing bearer migration according to the acquired load information; wherein acquiring load information of an NSA node comprises: in response to that the bearer migration needs to be performed, transmitting, by a current Long-Term Evolution, LTE, side, a load request message to candidate NSA nodes, and acquiring load information of the candidate NSA nodes; and wherein, performing bearer migration according to the acquired load information, comprises: sorting, by the current LTE side, according to the acquired load information of the candidate NSA nodes, acquired candidate NSA nodes in a preset load sorting mode to form a target NSA node list; and selecting, by the current LTE side, from the target NSA node list, a target NSA node for user equipment, UE, bearer migration attempts until the bearer migration is successful.

In some implementations, the preset load sorting mode at least includes one of: sorting according to the traffic size of bearers, sorting according to the priority of bearers, and sorting from the lowest to highest load.

For N bearer migration options, bearer sorting may be performed in unit of UEs or individual bearers.

By considering the load information of the NSA node during the bearer migration from the current LTE side to the NSA node, the situation where the migration of lots of UE bearers to one NSA node leads to a high load of this NSA node is avoided, the load of a plurality of NSA nodes can also be increased evenly, and the load of high-load NSA nodes is relieved, leading to a relatively balanced load and high operation efficiency of NSA nodes in the NSA networking.

In Scenario two, the current NSA node migrates bearers to other candidate NSA nodes or the LTE side when the load is high.

The performing bearer migration according to the acquired load information includes the following.
1) The load state of the current NSA node is determined; and, when the load of the current NSA node is continuously higher than a preset load threshold within a period of time, a determination is made that the current NSA node is in a high load state.
2) When a determination is made that the current NSA node is in the high load state, the current NSA node sorts the acquired candidate NSA nodes in a preset load sorting mode according to the acquired load information of the candidate NSA nodes; and, the current NSA node selects first N candidate NSA nodes to form a target NSA node list.
3) The current NSA node selects, from the target NSA node list, a target NSA node for bearer migration of the NSA node, and the bearers of the current NSA node are migrated to bearers of the target NSA node, until the bearer migration is successful.
4) When the bearer migration from the current NSA nodes to all target NSA nodes in the target NSA node list is unsuccessful, the bearers of the current NSA node are migrated back to the LTE side.

In some implementations, the preset load sorting mode at least includes one of: sorting according to the traffic size of bearers, sorting according to the priority of bearers, and sorting from the lowest to highest load.

For N bearer migration options, bearer sorting may be performed in unit of UEs or individual bearers.

By migrating bearers to other NSA node or back to the LTE side when the NSA node has a high load, the load of high-load NSA nodes is relieved, leading to a relatively balanced load and high operation efficiency of NSA nodes in the NSA networking.

In the embodiment, by actively or passively acquiring load information of candidate NSA nodes and performing bearer migration according to the acquired load information of the candidate NSA nodes, the load of high-load NSA nodes is relieved, leading to a relatively balanced load and high operation efficiency of NSA nodes in the NSA networking. Specifically, firstly, by considering the load information of the NSA node during the bearer migration from the current LTE side to the NSA node, the situation where the migration of lots of UE bearers to one NSA node leads to a high load of this NSA node is avoided, and the load of a plurality of NSA nodes can also be increased evenly. Secondly, by migrating bearers to other NSA node or back to the LTE side when the NSA node has a high load, the load of high-load NSA nodes is relieved.

In an embodiment, as shown in FIG. 4, the present disclosure provides a bearer migration apparatus to which the bearer migration method according to the embodiments of the present disclosure is applied. The apparatus includes an acquisition module 10 and a migration module 20. The acquisition module 10 is configured to acquire load information of an NSA node. The migration module 20 is configured to perform bearer migration according to the acquired load information.

In some implementations, the acquisition module 10 acquires the load information of the NSA node in two ways, i.e., active acquisition and passive acquisition.
1) The active acquisition means that when it is necessary to perform bearer migration, the current LTE side or the current NSA node actively transmits a load request message to candidate NSA nodes and acquires the load information of the candidate NSA nodes; and, upon receiving the load request message, the candidate NSA nodes reply the load information of the candidate NSA nodes to the current LTE side or the current NSA node.
2) The passive acquisition means that the current LTE side or the current NSA node passively receives the load information transmitted by the candidate NSA nodes and stores the latest received load information of the candidate NSA node.

In some implementations, the migration module 20 performing bearer migration according to the acquired load information includes the following two scenarios.

In Scenario one, the bearers on the LTE side are migrated to an NSA node.

The migration module 20 performing bearer migration according to the acquired load information includes the following.
1) When an NSA terminal enters the current LTE side that needs to perform bearer migration, the current LTE side sorts the acquired candidate NSA nodes in a preset load sorting mode according to the acquired load information of the candidate NSA nodes.
2) The current LTE side selects first N (N is an integer) candidate NSA nodes to form a target NSA node list.
3) The current LTE side selects, from the target NSA node list, a target NSA node for UE bearer migration attempts until the bearer migration is successful.

In some implementations, the preset load sorting mode at least includes one of: sorting according to the traffic size of bearers, sorting according to the priority of bearers, and sorting from the lowest to highest load.

For N bearer migration options, bearer sorting may be performed in unit of UEs or individual bearers.

By considering the load information of the NSA node during the bearer migration from the current LTE side to the NSA node, the situation where the migration of lots of UE bearers to one NSA node leads to a high load of this NSA node is avoided, the load of a plurality of NSA nodes can also be increased evenly, and the load of high-load NSA nodes is relieved, leading to a relatively balanced load and high operation efficiency of NSA nodes in the NSA networking.

In Scenario two, the current NSA node migrates bearers to other candidate NSA nodes or the LTE side when the load is high.

The migration module 20 performing bearer migration according to the acquired load information includes the following.
1) The load state of the current NSA node is determined; and, when the load of the current NSA node is continuously higher than a preset load threshold within a period of time, a determination is made that the current NSA node is in a high load state.
2) When a determination is made that the current NSA node is in the high load state, the current NSA node sorts the acquired candidate NSA nodes in a preset load sorting mode according to the acquired load information of the candidate NSA nodes; and, the current NSA node selects first N candidate NSA nodes to form a target NSA node list.
3) The current NSA node selects, from the target NSA node list, a target NSA node for bearer migration of the NSA node, and the bearers of the current NSA node are migrated to bearers of the target NSA node, until the bearer migration is successful.
4) When the bearer migration from the current NSA nodes to all target NSA nodes in the target NSA node list is unsuccessful, the bearers of the current NSA node are migrated back to the LTE side.

In some implementations, the preset load sorting mode at least includes one of: sorting according to the traffic size of bearers, sorting according to the priority of bearers, and sorting from the lowest to highest load.

For N bearer migration options, bearer sorting may be performed in unit of UEs or individual bearers.

By migrating bearers to other NSA node or back to the LTE side when the NSA node has a high load, the load of high-load NSA nodes is relieved, leading to a relatively balanced load and high operation efficiency of NSA nodes in the NSA networking.

It is to be noted that the apparatus embodiment belongs to the same concept as the method embodiment, the specific implementation process may refer to the method embodiment, and the technical features in the method embodiment are all applicable to the apparatus embodiment and will not be repeated here.

The technical schemes of the present disclosure will be further described below in detail by embodiments.

### Embodiment I

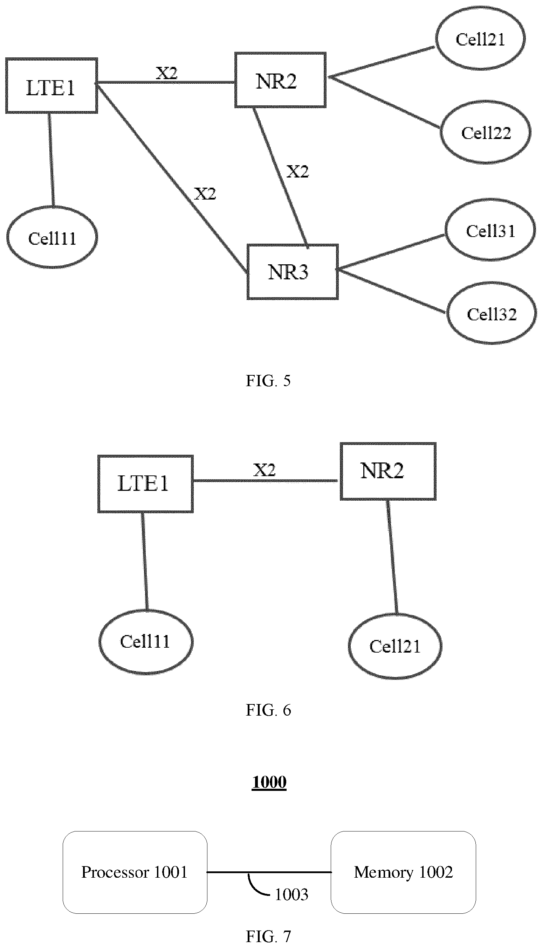

In the embodiment, the bearers of the LTE side are migrated to an NSA node, and the load information is acquired actively, as shown in FIG. 5.

In FIG. 5, Cell11 is a cell of LTE1, Cell21 and Cell22 are cells of an NSA node NR2, and Cell31 and Cell32 are cells of an NSA node NR3.
1. An NSA terminal accesses cell11, and the LTE1 requests the load information of the cell21, cell22, cell31 and cell32 from the NR2 and NR3.
2. The NR2 and NR3 feed the load information of the cell21, cell22, cell31 and cell32 back to the LTE1.
3. The LTE1 performs sorting from low to high according to the load information of load information of the cell21, cell22, cell31 and cell32 and outputs a target NSA node list, and the NSA terminal makes bearer migration attempts one by one.
4. After the bearers are successively migrated to a certain NSA node, the LTE1 stops bearer migration attempt.

### Embodiment II

In the embodiment, an NSA node migrates beaters to other NSA nodes, the load information is acquired passively, and other NSA nodes feed back the load periodically, as shown in FIG. 5.

In FIG. 5, Cell11 is a cell of LTE1, Cell21 and Cell22 are cells of an NSA node NR2, and Cell31 and Cell32 are cells of an NSA node NR3.
1. The NR3 periodically feeds the load information of the cell31 and cell32 to the NR2 and LTE1, and the LTE1 and NR2 store the latest acquired load information; and, the NR2 periodically feeds the load information of the cell21 and cell22 to the NR3 and LTE1, and the NR3 and the LTE1 store the latest acquired load information. In this case, the LTE1 stores the load information of the cell21, cell22, cell31 and cell32, the NR2 stores the load information of the cell21, cell2, cell31 and cell32, and the NR3 stores the load information of the cell21, cell22, cell31 and cell32.
2. The NSA terminal access the cell11. When it is necessary to perform bearer migration, the LTE1 performs sorting from low to high according to the latest stored load information of the cell21, cell22, cell31 and cell32, and eventually selects the cell21 of the node NR2 for bearer migration.
3. The load of the node cell21 satisfies a preset threshold in a high load condition within a period of time, and the node cell21 performs sorting from low to high according to the latest stored load information of the cell22, cell 31 and cell32 and outputs a target NSA node list. The cell21 makes bearer migration attempts to the nodes in the target NSA node list one by one.
4. When a certain bearer is successfully migrated to a certain NSA node, the cell21 stops migration attempt of the bearer; and, when all bearers are migrated, the process ends.

### Embodiment III

In the embodiment, an NSA node migrates beaters to other NSA nodes, the load information is acquired passively, and other NSA nodes transmit the load when the load is changed, as shown in FIG. 6.

In FIG. 6, Cell11 is a cell of the LTE1, and Cell21 is a cell of the NSA node NR2.
1. The NR2 feeds the load information of the cell21 to the LTE1 when the load is changed, and the LTE1 stores the latest acquired load information. In this case, the LTE1 stores the load information of the cell21.
2. The NSA terminal accesses the cell11, and the bearers are migrated to the cell21 according to the acquired load information of the cell21 when it is necessary to perform bearer migration. (Since there is only the node cell21, it is unnecessary to perform sorting according to the load).
3. The load of the node cell21 satisfies a preset threshold in the high load condition within a period of time. Since there are no other NSA nodes, the cell21 selects some bearers and migrates the bearers back to the LTE side.

In addition, an embodiment of the present disclosure further provides an electronic device. As shown in FIG. 7, the electronic device 1000 includes a memory 1002, a processor 1001 and one or more computer programs that are stored on the memory 1002 and executable by the processor 1001. The memory 1002 and the processor 1001 are coupled through a bus system 1003, and the one or more computer programs, when executed by the processor 1001, cause the processor 1001 to implement the bearer migration method according to the embodiments of the present disclosure. The method includes steps S1 to S2

At S1, load information of an NSA node is acquired.

At S2, bearer migration is performed according to the acquired load information.

The method disclosed in the embodiment of the present disclosure may be applied to the processor 1001 or implemented by the processor 1001. The processor 1001 may be an integrated circuit chip having the signal processing capability. During the implementation process, the steps in the above method may be completed by an integrated logic circuit of hardware in the processor 1001 or by instructions in the form of software. The processor 1001 may be a general-purpose processor, a DSP or other programmable logic devices, a discrete gate or a transistor logic device, a discrete hardware component, etc. The processor 1001 may implement or execute the method, steps and logic blocks disclosed in the embodiments of the present disclosure. The general-purpose processor may be a microprocessor or any conventional processor, etc. The steps in the method according to the embodiments of the present disclosure may be directly embodied as being executed by a hardware decoding processor, or being executed by a combination of hardware and software modules in the decoding processor. The software modules may reside in a storage medium, the storage medium resides in the memory 1002, and the processor 1001 reads the information in the memory 1002 to complete the steps in the above method in combination with the hardware.

It should be understood that the memory 1002 in the embodiment of the present disclosure may be a volatile memory or a non-volatile memory or may include volatile and non-volatile memories. The non-volatile memory may be read-only memories (ROMs), programmable read-only memories (PROMs), erasable read-only memories (EPROMs), electrically erasable programmable read-only memories (EEPROMs), ferromagnetic random access memories (FRAMs), flash memories or other memory technologies, compact disk read-only memories (CD-ROMs), digital video disks (DVDs) or other optical disk storages, magnetic cassettes, magnetic tapes, magnetic disk storages or other magnetic storage devices. The volatile memory may be random access memories (RAMs), and by way of illustration but not limitation, many forms of RAMs are available, such as static random access memories (SRAMs), synchronous static random access memories (SSRAMs), dynamic random access memories (DRAMs), synchronous dynamic random access memories (SDRAMs), double data rate synchronous dynamic random access memories (DDRSDRAMs), enhanced synchronous dynamic random access memories (ESDRAMs), SyncLink dynamic random access memories (SLDRAMs) and direct rambus random access memories (DRRAMs). The memory described in the embodiment of the present disclosure is intended to include, but not limited to, these memories and any other suitable types of memories.

It is to be noted that the base station embodiment belongs to the same concept as the method embodiment, the specific implementation process may refer to the method embodiment, and the technical features in the method embodiment are all applicable to the base station embodiment and will not be repeated here.

In addition, in an example embodiment, the embodiment of the present disclosure further provides a computer storage medium, particularly a computer-readable storage medium, for example, including a memory 102 storing computer programs. The computer storage medium stores one or more programs for performing bearer migration method which, when executed by a processor 1001, cause the processor 1001 to implement the bearer migration method according to the embodiments of the present disclosure. The method includes steps S1 to S2

At S1, load information of an NSA node is acquired.

At S2, bearer migration is performed according to the acquired load information.

Compared with the related technology, the embodiments of the present disclosure provide a bearer migration method and apparatus, an electronic device and a storage medium. The bearer migration method includes steps of: acquiring load information of an NSA node; and, performing bearer migration according to the acquired load information. In accordance with the embodiments of the present disclosure, by actively or passively acquiring load information of candidate NSA nodes and performing bearer migration according to the acquired load information of the candidate NSA nodes, the load of high-load NSA nodes is relieved, leading to relatively balanced load and high operation efficiency of NSA nodes in the NSA networking. In an embodiment, firstly, by considering the load information of the NSA node during the bearer migration from the current LTE side to the NSA node, the situation where the migration of lots of UE bearers to one NSA node leads to a high load of this NSA node is avoided, and the load of a plurality of NSA nodes can also be increased evenly. Secondly, by migrating bearers to other NSA nodes or back to the LTE side when the NSA node has a high load, the load of high-load NSA nodes is relieved.

It is to be noted that the program embodiment of the bearer migration method on the computer-readable storage medium belongs to the same concept as the method embodiment, the specific implementation process may refer to the method embodiment, and the technical features in the method embodiment are all applicable to the embodiment of the computer-readable storage medium and will not be repeated here.

It is to be noted that, in the present disclosure, the term "comprise/comprising", "include/including" or any other variant thereof is non-exclusive, so that a process, method, article or device including a series of elements not only includes these elements, but also includes other elements not listed explicitly, or further includes elements inherent to this process, method, article or device. Without further restrictions, the element defined by the statement "comprising an/a..." does not exclude the presence of other identical elements in the process, method, article or device including this element.

The serial numbers in the embodiments of the present disclosure are merely for description and does not indicate the superiority of the embodiments.

From the above description of the implementations, it should be clearly understood by those having ordinary skill in the art that the method embodiment may be implemented by software and necessary general-purpose hardware platforms. Of course, the method embodiment may also be implemented by hardware. However, in many cases, the former is preferred. Based on this understanding, the technical schemes of the present disclosure may be essentially embodied in the form of software products, or some of the technical schemes that contribute to the existing technology may be embodied in the form of software products. The computer software products are stored in a storage medium (e.g., ROM/RAM, magnetic disks or optional disks), and include a number of instructions to enable a terminal (which may be a mobile terminal, a computer, a server, an air conditioner, a network device, etc.) to execute the methods according to various embodiments of the present disclosure.

## Claims

1. A bearer migration method, comprising:
acquiring load information of a Non-Standalone, NSA, node (S1); and
performing bearer migration according to the acquired load information (S2);
**characterized in that**,
acquiring load information of an NSA node (S1) comprises:
in response to that the bearer migration needs to be performed, transmitting, by a current Long-Term Evolution, LTE, side, a load request message to candidate NSA nodes, and acquiring load information of the candidate NSA nodes; and
wherein, performing bearer migration according to the acquired load information (S2), comprises:
sorting, by the current LTE side, according to the acquired load information of the candidate NSA nodes, acquired candidate NSA nodes in a preset load sorting mode to form a target NSA node list; and
selecting, by the current LTE side, from the target NSA node list, a target NSA node for user equipment, UE, bearer migration attempts until the bearer migration is successful.

2. The method of claim 1, wherein, acquiring load information of an NSA node comprises:
receiving, by the current LTE side, the load information transmitted by the candidate NSA nodes, acquiring the load information of the candidate NSA nodes, and storing the load information latest received of the NSA node.

3. The method of claim 1, wherein, acquiring load information of an NSA node, comprises:
in response to that bearer migration needs to be performed, transmitting, by the current NSA node, a load request message to candidate NSA nodes, and acquiring load information of the candidate NSA nodes.

4. The method of claim 1, wherein, acquiring load information of an NSA node, comprises:
receiving, by the current NSA node, the load information transmitted by the candidate NSA nodes, acquiring the load information of the candidate NSA nodes, and storing the load information latest received of the NSA node.

5. The method of claim 3 or 4, wherein, performing bearer migration according to the acquired load information, comprises:
determining a load state of a current NSA node;
in response to a determination that the current NSA node is in a high load state, sorting, by the current NSA node, according to the acquired load information of the candidate NSA nodes, the acquired candidate NSA nodes in a preset load sorting mode to form a target NSA node list;
selecting, by the current NSA node, from the target NSA node list, a target NSA node for bearer migration of the NSA node; and
migrating bearers of the current NSA node to bearers of the target NSA node.

6. A bearer migration apparatus, to which the bearer migration method of any one of clams 1 to 5 is applied, the apparatus comprising: an acquisition module (10) and a migration module (20), wherein:
the acquisition module is configured to acquire load information of an NSA node; and
the migration module is configured to perform bearer migration according to the acquired load information.

7. A computer-readable storage medium, storing programs for performing a bearer migration method which, when executed by a processor, cause the processor to carry out the bearer migration method of any one of claims 1 to 5.

## Patentansprüche

1. Trägermigrationsverfahren, umfassend:
Erfassen von Lastinformationen eines Non-Standalone- (NSA-) Knotens (S1); und
Durchführen einer Trägermigration gemäß den erfassten Lastinformationen (S2);
**dadurch gekennzeichnet, dass**
das Erfassen von Lastinformationen eines NSA-Knotens (S1) umfasst:
als Reaktion darauf, dass die Trägermigration durchgeführt werden muss, das Übertragen einer Lastanforderungsnachricht an NSA-Kandidatenknoten durch eine aktuelle Long-Term-Evolution- (LTE-) Seite und das Erfassen von Lastinformationen der NSA-Kandidatenknoten; und
wobei das Durchführen einer Trägermigration gemäß den erfassten Lastinformationen (S2) umfasst:
Sortieren, durch die aktuelle LTE-Seite, der erfassten NSA-Kandidatenknoten in einem voreingestellten Lastsortiermodus gemäß den erfassten Lastinformationen der NSA-Kandidatenknoten, um eine NSA-Zielknotenliste zu bilden; und
Auswählen, durch die aktuelle LTE-Seite, eines NSA-Zielknotens aus der NSA-Zielknotenliste für Trägermigrationsversuche von Benutzergeräten (UE), bis die Trägermigration erfolgreich ist.

2. Verfahren nach Anspruch 1, wobei das Erfassen von Lastinformationen eines NSA-Knotens umfasst:
Empfangen, durch die aktuelle LTE-Seite, der von den NSA-Kandidatenknoten übertragenen Lastinformationen, Erfassen der Lastinformationen der NSA-Kandidatenknoten und Speichern der zuletzt empfangenen Lastinformationen des NSA-Knotens.

3. Verfahren nach Anspruch 1, wobei das Erfassen von Lastinformationen eines NSA-Knotens umfasst:
als Reaktion darauf, dass die Trägermigration durchgeführt werden muss, das Übertragen einer Lastanforderungsnachricht an NSA-Kandidatenknoten durch den aktuellen NSA-Knoten und das Erfassen von Lastinformationen der NSA-Kandidatenknoten.

4. Verfahren nach Anspruch 1, wobei das Erfassen von Lastinformationen eines NSA-Knotens umfasst:
Empfangen, durch den aktuellen NSA-Knoten, der von den NSA-Kandidatenknoten übertragenen Lastinformationen, Erfassen der Lastinformationen der NSA-Kandidatenknoten und Speichern der zuletzt empfangenen Lastinformationen des NSA-Knotens.

5. Verfahren nach Anspruch 3 oder 4, wobei das Durchführen einer Trägermigration gemäß den erfassten Lastinformationen umfasst:
Bestimmen eines Lastzustands eines aktuellen NSA-Knotens;
als Reaktion auf eine Bestimmung, dass sich der aktuelle NSA-Knoten in einem Hochlastzustand befindet, Sortieren, durch den aktuellen NSA-Knoten, der erfassten NSA-Kandidatenknoten in einem voreingestellten Lastsortiermodus gemäß den erfassten Lastinformationen der NSA-Kandidatenknoten, um eine NSA-Zielknotenliste zu bilden;
Auswählen, durch den aktuellen NSA-Knoten, eines NSA-Zielknotens für die Trägermigration des NSA-Knotens aus der NSA-Zielknotenliste; und
Migrieren von Trägern des aktuellen NSA-Knotens zu Trägern des NSA-Zielknotens.

6. Trägermigrationsgerät, auf das das Trägermigrationsverfahren nach einem der Ansprüche 1 bis 5 angewendet wird, wobei das Gerät umfasst: ein Erfassungsmodul (10) und ein Migrationsmodul (20), wobei:
das Erfassungsmodul zum Erfassen von Lastinformationen eines NSA-Knotens konfiguriert ist; und
das Migrationsmodul zum Durchführen einer Trägermigration gemäß den erfassten Lastinformationen konfiguriert ist.

7. Computerlesbares Speichermedium, auf dem Programme zum Durchführen eines Trägermigrationsverfahrens gespeichert sind, die beim Ausführen durch einen Prozessor den Prozessor dazu veranlassen, das Trägermigrationsverfahren nach einem der Ansprüche 1 bis 5 durchzuführen.

## Revendications

1. Procédé de migration de support, comprenant :
acquérir des informations de charge d'un nœud non autonome (en Anglais Non-Standalone), NSA (S1) ; et
effectuer la migration de support selon les informations de charge acquises (S2) ;
**caractérisée en ce que**,
l'acquisition d'informations de charge d'un nœud NSA (S1) comprend :
en réponse au fait que la migration de support doit être effectuée, transmettre, par un côté d'évolution à long terme (en Anglais Long-Term Evolution), LTE, actuel, un message de demande de charge aux nœuds NSA candidats, et acquérir des informations de charge des nœuds NSA candidats ; et
dans lequel, effectuer une migration de support selon les informations de charge acquises (S2), comprend :
trier, par le côté LTE actuel, selon les informations de charge acquises des nœuds NSA candidats, les nœuds NSA candidats acquis dans un mode de tri de charge prédéfini pour former une liste de nœuds NSA cibles ; et
sélectionner, par le côté LTE actuel, dans la liste de nœuds NSA cibles, un nœud NSA cible pour les tentatives de migration de support de l'équipement utilisateur (en Anglais User Equipment), UE, jusqu'à ce que la migration de support soit réussie.

2. Procédé selon la revendication 1, dans lequel, l'acquisition d'informations de charge d'un nœud NSA comprend :
recevoir, par le côté LTE actuel, les informations de charge transmises par les nœuds NSA candidats, acquérir les informations de charge des nœuds NSA candidats, et stocker les informations de charge reçues en dernier du nœud NSA.

3. Procédé selon la revendication 1, dans lequel, l'acquisition d'informations de charge d'un nœud NSA comprend :
en réponse au fait que la migration de support doit être effectuée, transmettre, par le nœud NSA actuel, un message de demande de charge aux nœuds NSA candidats, et acquérir les informations de charge des nœuds NSA candidats.

4. Procédé selon la revendication 1, dans lequel, l'acquisition d'informations de charge d'un nœud NSA comprend :
recevoir, par le nœud NSA actuel, les informations de charge transmises par les nœuds NSA candidats, acquérir les informations de charge des nœuds NSA candidats, et stocker les informations de charge reçues en dernier du nœud NSA.

5. Procédé selon la revendication 3 ou 4, dans lequel, effectuer une migration de support selon les informations de charge acquises, comprend :
déterminer un état de charge d'un nœud NSA actuel ;
en réponse à une détermination que le nœud NSA actuel est dans un état de charge élevée, trier, par le nœud NSA actuel, selon les informations de charge acquises des nœuds NSA candidats, les nœuds NSA candidats acquis dans un mode de tri de charge prédéfini pour former une liste de nœuds NSA cibles ;
sélectionner, par le nœud NSA actuel, dans la liste de nœuds NSA cibles, un nœud NSA cible pour la migration de support du nœud NSA ; et
migrer les supports du nœud NSA actuel vers les supports du nœud NSA cible.

6. Appareil de migration de support, auquel le procédé de migration de support selon l'une quelconque des revendications 1 à 5 est appliqué, l'appareil comprenant : un module d'acquisition (10) et un module de migration (20), dans lequel :
le module d'acquisition est configuré pour acquérir des informations de charge d'un nœud NSA ; et
le module de migration est configuré pour effectuer une migration de support selon les informations de charge acquises.

7. Support de stockage lisible par ordinateur, stockant des programmes pour effectuer un procédé de migration de support qui, lorsqu'il est exécuté par un processeur, amène le processeur à mettre en œuvre le procédé de migration de support selon l'une quelconque des revendications 1 à 5.
